# EUROPÄISCHE PATENTANMELDUNG

(11) **EP 2 626 270 A2**
(43) Veröffentlichungstag der Anmeldung: **14.08.2013**
(21) Anmeldenummer: 13152621.2
(22) Anmeldetag: 25.01.2013
(51) Int. Cl.: B60W 50/14, B60W 30/10, B60W 40/06

(54) **Fahrerassistenzverfahren und Fahrerassistenzsystem für verschneite Straßen**

(30) Priorität: 09.02.2012 DE 102012201896
(71) Anmelder: ROBERT BOSCH GMBH, 70442 Stuttgart (DE)
(72) Erfinder: Niemz, Volker, 71277 Rutesheim (DE)

(57) **Zusammenfassung**

Die Erfindung betrifft ein Fahrerassistenzverfahren für verschneite Straßen, wobei ein optischer Sensor (1) eine Umgebung eines Fahrzeugs erfasst und aus den erfassten Daten eine aus Spuren vorausfahrender Fahrzeuge (38, 58) gebildete Fahrrinne (22, 53) erkannt wird, wobei bei einem Verlassen der Fahrrinne (22, 53) ein Signal an den Fahrer abgegeben wird. Die Erfindung betrifft außerdem ein Fahrerassistenzsystem zur Ausführung des Verfahrens.

## Beschreibung

### Stand der Technik

Die Erfindung betrifft ein Fahrerassistenzverfahren und ein Fahrerassistenzsystem für verschneite Straßen.

Spurassistenzsysteme, im Folgenden auch als Spurassistenten bezeichnet, werden insbesondere bei Autobahnfahrten eingesetzt, um den Fahrer auf längeren Strecken ohne starkes Verkehrsaufkommen bei der Spurhaltung zu entlasten, können aber auch im Stadtverkehr vorteilhaft verwendet werden. Spurassistenten werten Informationen über den Verlauf der Fahrspur, in welcher sich das Fahrzeug befindet, aus und geben in dem Moment, wenn ein Verlassen der Spur droht, wird beispielsweise ein akustisches Signal an den Fahrer aus oder nehmen einen automatischen Lenkeingriff vor. Hinzu kann eine grafische Ausgabe an den Fahrer kommen. Darüber hinaus wirken Spurassistenten mit Fahrzeugsteuerungssystemen zusammen, wobei sie in definiertem Umfang selbständig in den Antriebsstrang des Fahrzeugs und/oder in die Steuerung des Fahrzeugs eingreifen, etwa um drohende Kollision zu verhindern.

Die Spurassistenten verwenden Informationen, welche von einer Umgebungserkennungseinrichtung bereitgestellt werden. Die Umgebungserkennungseinrichtung umfasst typischerweise eine Umgebungserfassungseinrichtung und eine softwarebasierte Erkennungseinrichtung. Als Umgebungserfassungseinrichtung werden üblicherweise an dem Fahrzeug angeordnete Kameras verwendet, denn durch die Kamera können nicht nur Fahrbahnbegrenzungselemente, die eine dreidimensionale Struktur aufweisen, wie beispielsweise Leitplanken oder Bordsteine, erkannt werden, sondern auch auf die Straße aufgemalte Fahrbahnmarkierungen, die über der Fahrbahn nicht wesentlich erhaben sind.

Aus der DE 103 49 631 A1 ist ein Fahrerassistenzverfahren bekannt, wobei in Abhängigkeit von Witterungsbedingungen aus einem von einem Videosensor aufgenommenen Bild gewonnene Informationen der Vorlauf von Fahrspuren abgeschätzt wird. Neben den Fahrspurrandmarkierungen können weitere aus den Bildern des Videosensors extrahierte Informationen verwendet werden, nämlich die Trajektorie eines oder mehrerer vorausfahrender Fahrzeuge, bei Regen oder Schnee die Fahrspuren eines oder mehrerer vorausfahrender Fahrzeuge, die Trajektorie eines oder mehrerer entgegenkommender Fahrzeuge, der Verlauf von Fahrbahnrandbegrenzungen wie Leitplanken, Bordsteine, etc. Die Daten werden in einem Spurdatenschätzmodul zusammengeführt, gewichtet, und auf Basis des abgeschätzten Spurverlaufs wird dem Fahrer bei drohendem Verlassen der Spur eine Warnung ausgegeben.

Nachteilig darin ist, dass dem System stets die tatsächlichen Fahrspuren der Fahrbahn zugrunde gelegt werden. Daher müssen dem System Daten über den Verlauf von detektierten Fahrspurrandmarkierungen und/oder Informationen eines globalen Positioniersystems und/oder Daten einer Navigationskarte zur Verfügung stehen. Das kann zwar funktionieren, wenn schlechte Witterungsbedingungen vorliegen, jedoch ist das System dann nicht mehr brauchbar, wenn beispielsweise die Straße so stark verschneit ist, dass keine Fahrspurmarkierungen mehr erkannt werden können, weil diese unter einer Schneedecke liegen und keine GPS-Daten vorliegen.

Aufgabe der Erfindung ist es, ein Fahrerassistenzverfahren und ein Fahrerassistenzsystem anzugeben, welches eine Unterstützung für den Fahrer zur Navigation in verschneiten Straßenabschnitten bereitstellt.

### Offenbarung der Erfindung

Die Aufgabe wird gelöst durch ein Fahrerassistenzverfahren mit den Merkmalen nach dem Anspruch 1 und durch ein Fahrerassistenzsystem mit den Merkmalen nach dem Anspruch 10. Vorteilhafte Weiterbildungen der Erfindung sind in den abhängigen Ansprüchen definiert.

Demnach erfasst bei einem Fahrerassistenzverfahren ein optischer Sensor eine Umgebung eines Fahrzeugs und aus den erfassten Daten wird eine aus Spuren vorausfahrender Fahrzeuge gebildete Fahrrinne erkannt, wobei bei einem Verlassen der Fahrrinne ein Signal an den Fahrer abgegeben wird. Das an den Fahrer abgegebene Signal kann insbesondere ein akustisches Signal, ein optisches Signal oder ein haptisches Signal sein.

Die Spuren vorausfahrender Fahrzeuge werden in ihrer Vielfältigkeit im Sinne der Erfindung als Fahrrinne bezeichnet. Erfindungsgemäß wird also darauf abgestellt, das Fahrzeug entlang von Spuren vorausfahrender Fahrzeuge zu führen.

### Vorteile der Erfindung

Besonders vorteilhaft ist, dass bei der Erkennung der Fahrrinne lediglich Informationen aus dem vorhandenen Bildmaterial verwendet werden. Das System kann somit unabhängig von GPS-Daten verlässlich arbeiten. Auf dem Bildmaterial ist eine mögliche Trajektorie durch das verschneite Gebiet erkennbar, auf deren Verlassen eine Warnung an den Fahrer erfolgt, unabhängig von dem Verlauf etwaiger tatsächlicher Fahrspuren bzw. Fahrspurmarkierungen.

Die erkannte Fahrrinne kann zwei Reifenspuren eines vorausfahrenden Fahrzeugs und einen dazwischenliegenden unbefahrenen Streifen umfassen. Nach einer Ausführungsform der Erfindung werden die Reifenspuren vorausfahrender Fahrzeuge erkannt. Die Reifenspuren entstehen durch Befahrung der Schneedecke und sie setzen sich farblich dunkel gegenüber dem hellen Hintergrund der Schneedecke ab. Wenn mehrere Fahrzeuge aufeinander folgen, dann können sich akkumulierte Reifenspuren mit kontrastarmen Seitenbereichen ausbilden. Die erkannte Fahrrinne kann auch Reifenspuren mit einem dunklen Abdruck und weniger dunklen Übergangszonen zu den Seiten hin umfassen.

Wenn Reifenspuren mehrerer Fahrzeuge erkannt wurden, wird bevorzugt die am meisten befahrene Spur verfolgt, d. h. bevorzugt wird immer eine Mehrzahl der Fahrzeuge verfolgt, was durch eine Bestimmung der am stärksten befahrenen Spur erfolgen kann. Die Erkennung einer am stärksten befahrenen Spur kann über eine Strukturanalyse erfolgen und Berechnungen über einen einwertigen Differenzoperator und/oder eine Graustufenauswertung umfassen. Die Strukturanalyse kann eine Zählung von Kanten umfassen.

In einer Ausführungsform der Erfindung wird ein Profil eines Reifenabdrucks in einer Reifenspur eines vorausfahrenden Fahrzeugs erkannt. Die Erkennung des Profils kann über eine Strukturanalyse erfolgen und Berechnungen über einen einwertigen Differenzoperator und/oder über höherwertige Differenzoperationen umfassen und/oder eine Erkennung des Reifenprofilmusters. Die Strukturanalyse kann eine Zählung von Kanten umfassen.

Die in etwa in einer Fahrzeugbreite voneinander beabstandeten Reifenspuren des vorausfahrenden Fahrzeugs, welche im Folgenden auch als zusammengehörige Reifenspuren bezeichnet werden, begrenzen einen weißen Schneemittelstreifen. Nach einer Ausführungsform der Erfindung wird der durch die zusammengehörigen Reifenspuren eines vorausfahrenden Fahrzeugs begrenzte Streifen erkannt. Die Erkennung der am stärksten befahrenen Spur kann über eine Strukturanalyse erfolgen und Berechnungen über einen einwertigen Differenzoperator umfassen. Der Streifen kann auch über eine Pixelzählung der Breite nach ausgemessen werden. Der Streifen kann zur Navigation als virtuelle Mittelllinie verwendet werden, d. h. als eine Bezugslinie, welche parallel zu einer Mittelachse des Ego-Fahrzeugs verlaufen soll.

Wenn Reifenspuren auf den Fahrbahnen sichtbar sind, kann sich ein durch Spuren des Verkehrs und des Gegenverkehrs begrenzter weißer Mittelstreifen in der Mitte zwischen einer Fahrbahn und einer dazugehörigen Gegenfahrbahn ausbilden. Der weiße Mittelstreifen begrenzt die Fahrrinne des Egofahrzeugs linksseitig und die Fahrrinne des Gegenverkehrs zum Egofahrzeug aus Sicht des Egofahrzeugs rechtsseitig. Nach einer Ausführungsform der Erfindung wird der durch Spuren des Gegenverkehrs begrenzte weiße Mittelstreifen erkannt. Eine Navigation kann anhand der Lage des weißen Mittelstreifens erfolgen, indem das Ego-Fahrzeug rechtsseitig an dem weißen Mittelstreifen vorbeinavigiert wird. Die Fahrrinne kann dabei derart definiert sein, dass sie rechts angrenzend an dem Mittelstreifen verläuft.

Zusätzlich zur Erkennung der Fahrrinne kann ein Tracking des vorausfahrenden Fahrzeugs erfolgen. Nach einer Ausführungsform der Erfindung wird das vorausfahrende Fahrzeug verfolgt. Das Tracking des vorausfahrenden Fahrzeugs umfasst die Ermittlung der Position und der Geschwindigkeit des vorausfahrenden Fahrzeugs zum Egofahrzeug aus aufeinanderfolgenden digitalen Bildern des optischen Sensors. Hierbei kann vorteilhaft die Erkenntnis verwendet werden, dass eine Reifenspur zu dem vorausfahrenden Fahrzeug hinführt und dass sich jede Bewegung des vorausfahrenden Fahrzeugs, insbesondere auch ein Ausweichen vor einem Hindernis oder eine Kurvenfahrt, notwendigerweise in die hinter dem Fahrzeug liegenden Reifenspuren übersetzt. Die Erkenntnisse über die Position und die Bewegung des vorausfahrenden Fahrzeugs können die Erkenntnisse über die Fahrrinne ergänzen.

Nach einer Ausführungsform der Erfindung wird erkannt, ob es sich um Straße mit geringer Schneelast oder um eine Straße mit hoher Schneelast handelt. Im Falle der Straße mit hoher Schneelast werden bevorzugt die Reifenspuren der vorausfahrenden Fahrzeuge ausgewertet. Eine Auswertung von Bilddaten auf dem zwischen den Fahrbahnen befindlichen Mittelstreifen kann zusätzlich stattfinden, sie kann aber auch mit einem geringeren Gewicht berücksichtigt werden. Insbesondere kann bei der Straße mit hoher Schneelast auch nach Reifenprofilmustern im Schnee gesucht werden, welches eine Strukturanalyse durch höherwertige Differenzoperatoren erfordern kann. Bei einer Straße mit geringer Schneelast wird bevorzugt über Pixelzählen vorgegangen und bevorzugt nach den zwischen den Fahrbahnen angeordneten weißen Mittelstreifen gesucht.

Nach einer bevorzugten Ausführungsform ist das Verlassen der Fahrrinne dadurch definiert, dass die Räder beider Seiten des Fahrzeugs um eine Mindestdistanz aus der Fahrrinne geraten. Das Signal an den Fahrer wird also erst dann abgegeben, wenn die Räder beider Seiten um eine Mindestdistanz aus der Fahrrinne geraten sind. Das Verlassen der Fahrrinne kann demzufolge auch dadurch beschrieben werden, dass keines der Vorderräder sich mehr in einer und um eine Fahrrinne herum befindet. Die definierte Distanz kann dabei zwischen 0,5 m und 3 m, bevorzugt zwischen 1 m und 2 m sein. Alternativ dazu kann ein Verlassen der Fahrrinne auch dadurch definiert sein, dass der Abstand einer Mittelachse des Fahrzeugs zu einer Mittellinie durch einen durch zwei zusammengehörige Reifenspuren begrenzten Streifen einen definierten Abstand überschreitet oder einen Abstand zu einer Mittellinie eines links angrenzenden Mittelstreifens unterschritten wird.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktionen, die auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z. B. über ein Datennetzwerk wie etwa das Internet oder eine Kommunikationsverbindung wie etwa eine Telefonleitung oder eine drahtlose Verbindung.

Erfindungsgemäß ist außerdem ein Fahrerassistenzsystem zur Ausführung eines der beschriebenen Verfahren vorgesehen, welches
- einen optischen Sensor zur Aufnahme einer Fahrzeugumgebung,
- eine Komponente zur Erkennung von Fahrrinnen auf Bildern des optischen Sensors und
- eine Komponente zur Steuerung einer Vorrichtung zur Abgabe eines Warnsignals beim Verlassen der Fahrrinne aufweist.

Die Komponente zur Erkennung von Objekten auf Bildern des optischen Sensors verwendet beispielsweise Bildinformationen wie optische Kontraste, oder aus Bildfolgen oder von stereoskopischen Kameras gewonnene 3D-Informationen.

Das Fahrerassistenzsystem kann an eine Einrichtung gekoppelt sein, welche eine Wetterbedingung erfassen kann. Die Einrichtung zur Erfassung der Wetterbedingung kann sowohl eine aktive Sensorik umfassen, wie beispielsweise einen Temperaturfühler und/oder eine Einrichtung zur Messung einer Einstellung der Scheibenwischer als auch dazu geeignet sein, über eine Kommunikationsverbindung oder ein Datennetzwerk wie etwa das Internet Daten von einer aktuellen Wetterlage in der Nähe des Fahrzeugs zu empfangen.

Bevorzugt kann das Fahrerassistenzsystem zwischen zwei verschiedenen Modi umschalten, welche für eine Straße mit hoher Schneelast oder für eine Straße mit geringer Schneelast optimiert sind.

Weitere Ausführungsbeispiele und Vorteile der Erfindung werden nachfolgend mit Bezug auf die Zeichnungen beschrieben.

### Kurze Beschreibung der Zeichnungen

Es zeigen
- Fig. 1: eine schematische Darstellung funktionaler Komponenten eines Fahrerassistenzsystems,
- Fig. 2: ein Bild einer Frontkamera einer stark verschneiten Straße und
- Fig. 3: ein Bild einer Frontkamera von einer leicht verschneiten Straße.

### Ausführungsformen der Erfindung

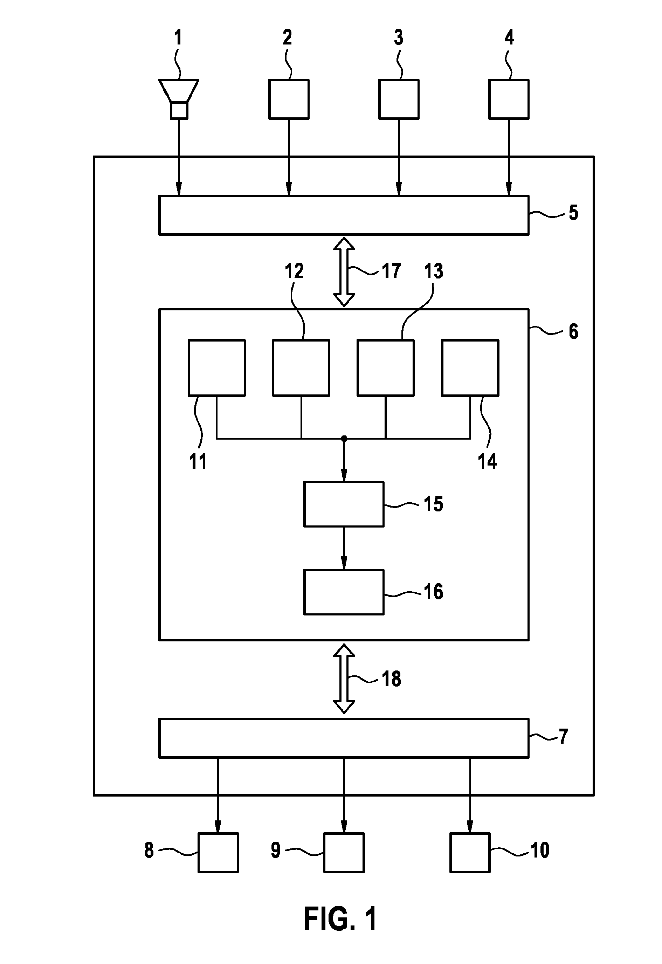

Fig. 1 zeigt eine schematische Darstellung funktionaler Komponenten eines Fahrerassistenzsystems gemäß der vorliegenden Erfindung. Das Fahrerassistenzsystem ist dazu ausgebildet, in einem Moment, in welchem das Fahrzeug eine Fahrrinne verlässt, ein Signal an den Fahrer abzugeben. Das Fahrerassistenzsystem umfasst hierzu einen optischen Sensor 1, welcher insbesondere eine Frontkamera und/oder eine Rückfahrkamera sein kann, und gegebenenfalls weitere Sensorik, beispielsweise einen GPS-Empfänger 2, eine Wetterbedingungserfassungseinrichtung 3 und eine Eigendatensensorik 4, deren Signale in einer Eingangsschaltung 5 empfangen werden. Die Eingangsschaltung 5 ist mit einem Bussystem 17 zum Datenaustausch mit einer Datenverarbeitungseinrichtung 6 verbunden. Die Datenverarbeitungseinrichtung 6 ist mit einem weiteren oder demselben Bussystem 18 mit einer Ausgangsschaltung 7 verbunden, welche Ausgabevorrichtungen wie insbesondere akustische Vorrichtungen 8, beispielsweise einen Signaltongenerator und/oder eine Boardradio, optische Vorrichtungen 9, beispielsweise eine Anzeige auf einem Head-Up-Display und/oder einem Head-Down-Display und haptische Vorrichtungen 10, beispielsweise eine vibrierendes Lenkrad, ansteuern kann.

Die Datenverarbeitungseinrichtung 6 umfasst ein Fahrrinnenerkennungsmodul 11, in welchem insbesondere die Daten der optischen Sensorik 1 weiterverarbeitet werden. Die Datenverarbeitungseinrichtung 6 kann weiterhin ein Szenerieerkennungsmodul 12 umfassen, ein Trackingmodul 13 und ein Eigendatenmodul 14. Das Fahrrinnenerkennungsmodul 11 kann Berechnungsmodule umfassen, die in einem Fahrerassistenzsystem zur Erkennung von Fahrspuren verwendet werden, beispielsweise optische Kontrastfilter, Strukturanalysemodule wie Differenzoperatoren usw. Das Szenerieerkennungsmodul 12 verarbeitet insbesondere die Daten des optischen Sensors 1 und des Wetterbedingungserfassungseinrichtung 3 und Daten der Eigendatenvorrichtung 7. Das Szenerieerkennungsmodul 12 ist dazu geeignet, zwischen einer Straße mit hoher Schneelast und einer Straße mit geringer Schneelast zu unterscheiden.

In dem Trackingmodul 13 wird die Bewegung eines vorausfahrenden Fahrzeugs verfolgt. Das Trackingmodul 13 verarbeitet hierzu insbesondere Daten des Bildsensors 1 und der Eigendatensensorik 4 und bestimmt die Position und die Relativgeschwindigkeit des vorausfahrenden Fahrzeugs. Im Eigendatenmodul 14 werden Eigendaten aus der Eigendatensensorik 4, wie etwa Fahrzeuggeometriedaten, eine Reifenstellung, ein Lenkwinkel, eine Geschwindigkeit des Fahrzeugs, und/oder eine absolute Position des Fahrzeugs weiterverarbeitet, welche es vom GPS-Empfänger 2 empfangen kann, um hieraus die Lage des Fahrzeugs sowie eine voraussichtliche Trajektorie des Fahrzeugs zu bestimmen.

Die Daten des Fahrrinnenerkennungsmoduls 11, des Szenerieerkennungsmoduls 12, des Trackingmoduls 13 und des Eigendatenmoduls 14 werden in einem Situationsevaluierungsmodul 15 zusammengeführt. Im Situationsevaluierungsmodul 15 wird durch Vergleich der ermittelten Fahrrinnendaten mit dem voraussichtlichen Kurs des Fahrzeugs eingeschätzt, ob ein Verlassen der Fahrrinne vorliegt und/oder unmittelbar zu erwarten ist. Das Situationsevaluierungsmodul 15 kann Daten an ein Ausgabesteuerungsmodul 16 weitergeben, welches die Ausgangsschaltung 7 steuern kann. Über die Ausgangsschaltung 7 werden ausgehend von der festgestellten Situation über die externen Geräte 8, 9, 10 akustische, optische und haptische Warnungen an den Fahrer abgegeben und gegebenenfalls ein Lenkeingriff und/oder ein Bremseingriff vorgenommen.

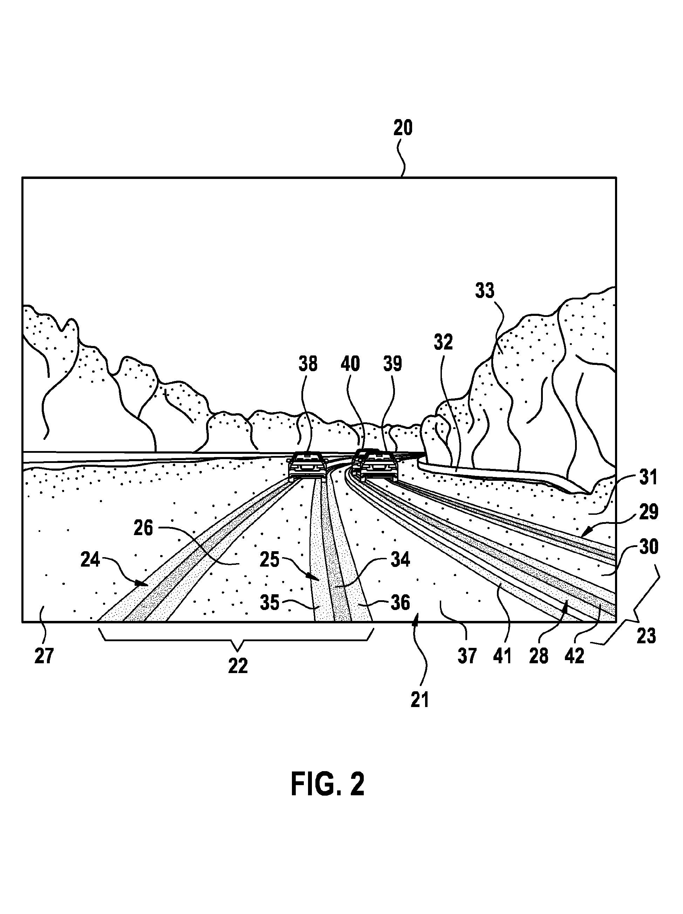

Fig. 2 zeigt ein durch eine Frontkamera aufgenommenes Bild 20 mit einer typischen Verkehrssituation auf einer Straße 21 mit hoher Schneelast. Dargestellt sind zwei nebeneinander gelegene Fahrrinnen 22, 23, welche durch vorausfahrende Fahrzeuge in den Schnee geprägt wurden. Eine linke Fahrrinne 22 ist frontal vor dem Ego-Fahrzeug gelegen, welches sich auf einer linken Fahrspur auf der Straße 21 befindet. Die linke Fahrrinne 22 umfasst eine linke Reifenspur 24 und eine rechte Reifenspur 25, welche im Folgenden auch als zwei zusammengehörige Reifenspuren 24, 25 bezeichnet sind und welche einen dazwischenliegenden Streifen 26 begrenzen. Nach links grenzt die linke Reifenspur an einen unbefahrenen weißen Mittelstreifen 27. Die rechte Fahrrinne 23 umfasst ebenfalls zusammengehörige linke und rechte Reifenspuren 28, 29, welche den dazwischen gelegenen Streifen 30 begrenzen. Nach rechts grenzt die rechte Reifenspur 29 der rechten Fahrrinne 23 an einen unbefahrenen weißen Außenstreifen 31, auf welchem Leitplanken 32 angebracht sind und der an eine Bewaldung 33 angrenzt.

Die Reifenspuren 24, 25, 28, 29 sind durch eine Vielzahl vorhergehender Fahrzeuge entstanden. Anhand der rechten Reifenspur 25 der linken Fahrrinne 22 ist beispielhaft dargestellt, dass sie einen oder mehrere meistbefahrene innere Bereiche 34 aufweist, welche besonders dunkel ausgeprägt sind. Daran schließen sich äußere Bereiche 35, 36 an, die weniger dunkel ausgeprägt sind. Die Abgrenzung des inneren Bereichs 34 vom äußeren Bereich 35, 36 erfolgt vorzugsweise über ein Gradientenverfahren mittels eines Differenzoperators, d.h. durch Ermittlung eines Farbkontrasts zwischen den viel befahrenen, wenig befahrenen und unbefahrenen Schneedecken. Ebenso erfolgt die Abgrenzung der äußeren Bereiche 35, 36 gegen den unbefahrenen Streifen 26 zwischen den zusammengehörigen Reifen vorausfahrender Fahrzeuge und gegen den unbefahrenen Streifen 37 zwischen der linken und der rechten Fahrrinne 22, 23 vorzugsweise über ein Gradientenverfahren mittels eines Differenzoperators. Über eine Pixelzählung kann eine Breite des inneren Bereichs 34 und eine Breite der äußeren Bereiche 35, 36 bestimmt werden.

Anhand der linken Reifenspur 28 der rechten Fahrrinne 23 ist beispielhaft dargestellt, dass einzelne Reifenspuren, hier eine linksseitig eine einzelne Reifenspur 41 neben einem intensiv befahrenem Abschnitt 42 vorhanden sein können. Das Fahrrinnenerkennungsmodul 11 detektiert die einzelne Spur 41 und die Lage des intensiv befahrenen Abschnitts 42. Bevorzugt wird die Lage der Fahrrinne 23 in Bezug auf den intensiv befahrenen Abschnitt 42 bestimmt.

Bevorzugt wird die linke Fahrrinne 22 rechtsseitig durch den inneren Bereich 34 der rechten Reifenspur 25 bestimmt. Sie kann alternativ dazu auch durch die Lage eines dunkelsten Punktes der rechten Reifenspuren 25 bestimmt sein. Sie kann auch durch die Lage eines Mittelpunkts der inneren 34 oder inneren 34 und äußeren 35, 36 Bereiche der Reifenspur bestimmt sein. Es können auch mehrere der genannten Berechnungen zusammengeführt und geeignet gewichtet werden und zu einer Bestimmung des Verlaufs der Fahrrinne 22 verwendet werden. Die Fahrrinne 22 wird in Bezug auf die linke Reifenspur 25 analog bestimmt. Das Situationsevaluierungsmodul 15 stellt fest, ob der linksseitige Vorderreifen des Ego-Fahrzeugs die linke Fahrrinne linksseitig um einen definierten Abstand, beispielsweise 0,5 m bis 2 m, insbesondere 1 m, verlassen hat und ob der rechte Vorderreifen des Ego-Fahrzeugs die linke Fahrrinne rechtsseitig um einen definierten Abstand, beispielsweise 0,5 m bis 2 m, insbesondere 1 m, verlassen hat und gibt die Daten an das Ausgabesteuerungsmodul 16 weiter, wenn beide Bedingungen erfüllt sind.

Alternativ dazu oder zusätzlich dazu kann die linke Fahrrinne 22 durch den Verlauf des zwischen den zusammengehörigen Reifenspuren 24, 25 gelegenen Streifens 26 bestimmt werden. Das Situationsevaluierungsmodul 15 stellt hierbei fest, ob die Lage der Fahrzeugachse zu einem Mittelpunkt des zwischenliegenden Streifens 26 einen definierten Abstand, beispielsweise 0,5 m bis 2 m, insbesondere 1 m, überschritten hat und gibt die Daten an das Ausgabesteuerungsmodul 16 weiter, wenn die Bedingung erfüllt ist.

Weiterhin sind vorausfahrende Fahrzeuge 38, 39, 40 dargestellt. Mittels des Trackingmoduls 13 werden die vorausfahrenden Fahrzeuge 38, 39, 40 verfolgt und deren Abstände zum Ego-Fahrzeug und deren Relativgeschwindigkeit zum Ego-Fahrzeug berechnet. Dabei wird insbesondere festgestellt, welches Fahrzeug sich in derselben Fahrrinne wie das Ego-Fahrzeug befindet. Eine Verfolgung des in derselben Fahrrinne wie das Ego-Fahrzeug befindlichen voranfahrenden Fahrzeugs 38 kann das beschriebene Fahrerassistenzverfahren vorteilhaft ergänzen, beispielsweise in Straßenabschnitten, in welchen keine Fahrrinnen erkennbar sind, wie etwa unter Brücken oder in anderen schneegeschützten Abschnitten.

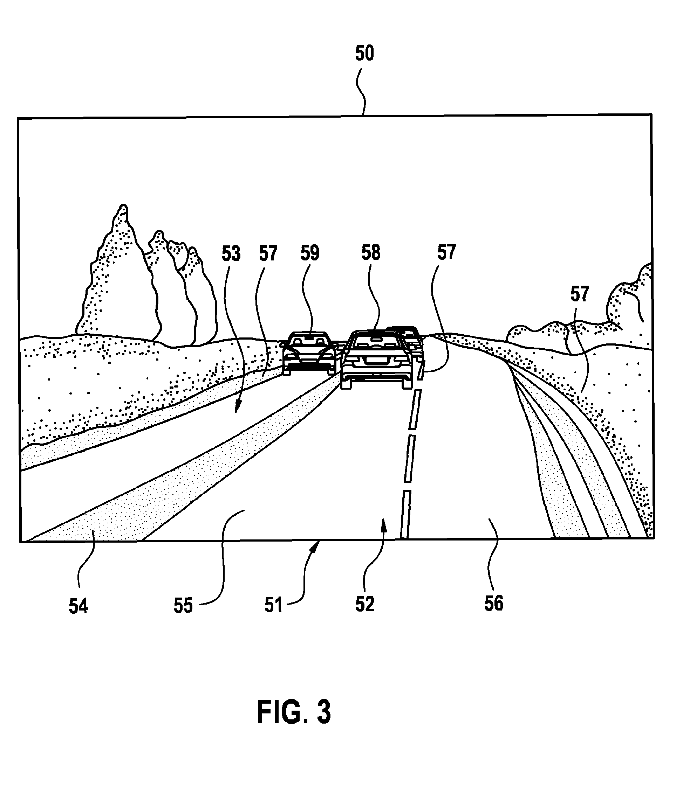

Figur 3 zeigt ein durch eine Frontkamera aufgenommenes Bild 50 mit einer typischen Verkehrssituation auf einer Straße 51 mit geringer Schneelast. Dargestellt sind zwei nebeneinander gelegene Fahrrinnen 52, 53, welche durch vorausfahrende Fahrzeuge eines Verkehrs 58 und durch Fahrzeuge eines Gegenverkehrs 59 in den Schnee geprägt wurden. Eine rechte Fahrrinne 52 ist frontal vor dem Ego-Fahrzeug gelegen, welches sich auf der Straße 51 befindet. Einzelne Reifenspuren sind in der rechten Fahrrinne nicht erkennbar. Nach links grenzt die rechte Fahrrinne 52 an einen unbefahrenen weißen Mittelstreifen 54, welcher die linke Fahrrinne 53 aus Sicht des Ego-Fahrzeugs rechtsseitig begrenzt. Mit anderen Worten liegt ein weißer Mittelstreifen 54 zwischen der rechten Fahrrinne 52 und der linken Fahrrinne 53. Die rechte Fahrrinne 52 umfasst eine linke Fahrspur 55 und eine rechte Fahrspur 56, welche durch Fahrbahnmarkierungen 57 voneinander abgegrenzt sind. Nach rechts grenzt die rechte Fahrspur 56 der rechten Fahrrinne 52 an einen unbefahrenen weißen Außenstreifen 57. Die Strukturen, insbesondere die Konturen der Strukturen, werden vom Fahrrinnenerkennungsmodul 11 wie in Bezug auf Figur 2 beschrieben erkannt. Die Breite des Mittelstreifens 54 wird dabei durch die Lage der Spuren des Gegenverkehrs 59 mitbestimmt.

Im Falle der Straße 51 mit geringer Schneelast wird eine Fahrrinnenverlassenswarnung dann generiert, wenn die rechte Fahrrinne 52 verlassen wurde, was beispielsweise durch eine Überfahrung des Mittelstreifens 54 oder des Außenstreifens 57 um eine definierte Distanz, beispielsweise 0,5 m bis 2 m, insbesondere 1 m, definiert sein kann. Zusätzlich kann der gewöhnliche Fahrspurassistent aktiv sein, welcher beim Verlassen der Fahrspuren ein Signal ausgibt.

## Patentansprüche

1. Fahrerassistenzverfahren, bei welchem ein optischer Sensor (1) eine Umgebung eines Fahrzeugs erfasst und aus den erfassten Daten eine aus Spuren vorausfahrender Fahrzeuge (38, 58) gebildete Fahrrinne (22, 52) erkannt wird, wobei bei einem Verlassen der Fahrrinne (22, 52) ein Signal an den Fahrer abgegeben wird.

2. Fahrerassistenzverfahren nach Anspruch 1, wobei Reifenspuren (24, 25, 28, 29) vorausfahrender Fahrzeuge (38, 39, 40) erkannt werden.

3. Fahrerassistenzverfahren nach Anspruch 2, wobei ein Profil eines Reifenabdrucks in einer Reifenspur (24, 25) eines vorausfahrenden Fahrzeugs (38) erkannt wird.

4. Fahrerassistenzverfahren nach einem der vorhergehenden Ansprüche, **dadurch gekennzeichnet, dass** ein durch zusammengehörige Reifenspuren (24, 25) vorausfahrender Fahrzeuge (38) begrenzter Streifen (26) erkannt wird.

5. Fahrerassistenzsystem, **dadurch gekennzeichnet, dass** ein durch Spuren eines Verkehrs (58) und eines Gegenverkehrs (59) begrenzter Streifen (54) erkannt wird.

6. Fahrerassistenzverfahren nach einem der vorhergehenden Ansprüche, **dadurch gekennzeichnet, dass** ein vorausfahrendes Fahrzeug (38) verfolgt wird.

7. Fahrerassistenzverfahren nach einem der vorhergehenden Ansprüche, **dadurch gekennzeichnet, dass** erkannt wird, ob es sich um eine Straße (21) mit hoher Schneelast oder um eine Straße (51) mit geringer Schneelast handelt.

8. Fahrerassistenzverfahren nach einem der vorhergehenden Ansprüche, wobei das Verlassen der Fahrrinne **dadurch gekennzeichnet ist, dass** die Räder beider Seiten des Fahrzeugs um eine Mindestdistanz aus der Fahrrinne (22, 52) geraten.

9. Computerprogramm zur Durchführung eines der Verfahren nach einem der Ansprüche 1 bis 8, wobei das Computerprogramm auf einer programmierbaren Computereinrichtung ausgeführt wird.

10. Fahrerassistenzsystem zur Ausführung eines der Verfahren nach einem der Ansprüche 1 bis 8, aufweisend
- einen optischen Sensor (1) zur Erfassung einer Fahrzeugumgebung,
- eine Komponente (11) zur Erkennung von Fahrrinnen (22, 52) auf Bildern (20, 50) des optischen Sensors (1),
- eine Komponente (16) zur Ausgabe eines Warnsignals beim Verlassen der Fahrrinne (22, 52).
